# EUROPÄISCHE PATENTSCHRIFT

(11) **EP 3 711 143 B1**
(45) Veröffentlichungstag und Bekanntmachung des Hinweises auf die Patenterteilung: **26.08.2026**
(21) Anmeldenummer: 18804591.8
(22) Anmeldetag: 16.11.2018
(51) Int. Cl.: H02K 1/276, H02K 1/2795, H02K 1/02

(54) **ROTOR FÜR EINEN AXIALFLUSSMOTOR, EINEN RADIALFLUSS-MOTOR ODER EINEN TRANSVERSALFLUSS-MOTOR**
ROTOR FOR AN AXIAL FLUX MOTOR, A RADIAL FLUX MOTOR, OR A TRANSVERSAL FLUX MOTOR
ROTOR POUR UN MOTEUR À FLUX AXIAL, MOTEUR À FLUX RADIAL OU MOTEUR À FLUX TRANSVERSAL

(30) Priorität: 17.11.2017 DE 102017127157
(43) Veröffentlichungstag der Anmeldung: 23.09.2020
(73) Patentinhaber: GKN Powder Metallurgy GmbH, 53177 Bonn (DE)
(72) Erfinder: TO, Hong Giang, 40231 Düsseldorf (DE); BORNEMANN, Nils, 53179 Bonn (DE); TILLER, Stefan, 53757 Sankt Augustin (DE)
(74) Vertreter: karo IP
(86) Internationale Anmeldenummer: PCT/EP2018/081567
(87) Internationale Veröffentlichungsnummer: WO 2019/096997

(56) Entgegenhaltungen:
- DE-A1- 102014 222 655
- DE-A1- 102015 214 893
- JP-A- 2012 249 347
- US-A1- 2015 244 219
- US-B2- 8 330 316
- US-B2- 9 246 364

## Beschreibung

Die Erfindung betrifft einen Rotor für einen elektrischen Antrieb, insbesondere für einen Axialfluss-Motor (AFM), einen Radialfluss-Motor oder einen Transversalfluss-Motor. Es sollen insbesondere unterschiedliche Rotoren für die einzelnen Typen von elektrischen Antrieben vorgeschlagen werden.

Elektrische Antriebe können als Generator und als elektrische Maschine eingesetzt werden. Elektrische Antriebe umfassen regelmäßig einen Stator und einen Rotor, die koaxial zueinander angeordnet sind. Der Rotor wird hier als der Träger von Permanentmagneten bezeichnet, während der Stator eine Spulenanordnung aufweist.

Der Rotor oder der Stator kann mit einer Welle verbunden sein, die durch den elektrischen Antrieb angetrieben wird (Betrieb als elektrische Maschine) oder eine Drehbewegung auf den Axialfluss-Motor überträgt (Generatorbetrieb). Der grundsätzliche Aufbau dieses elektrischen Antriebes kann als bekannt vorausgesetzt werden. Hier wird der besondere Aufbau eines Rotors beschrieben.

Bei einem Axialfluss-Motor sind Rotor und Stator insbesondere entlang der axialen Richtung hintereinander angeordnet. Dabei sind unterschiedlich magnetisierte Magnete entlang der Umfangsrichtung abwechselnd auf dem Rotor angeordnet. Die Magnetfeldlinien eines Axialfluss-Motors verlaufen im Wesentlichen parallel zur Drehachse in axialer Richtung, das Magnetfeld ist also im Wesentlichen parallel zur Drehachse orientiert.

Eine elektrische Axialflussmaschine ist z. B. aus der DE 10 2009 021 703 B4 bekannt.

Bei einem Radialfluss-Motor sind Rotor und Stator insbesondere in einer radialen Richtung hintereinander angeordnet (also z. B. Rotor innen und Stator außen oder umgekehrt. Dabei sind unterschiedlich magnetisierte Magnete entlang der Umfangsrichtung abwechselnd auf dem Rotor angeordnet. Die Magnetfeldlinien eines Radialfluss-Motors verlaufen im Wesentlichen quer zur Drehachse in radialer Richtung, das Magnetfeld ist also im Wesentlichen quer zur Drehachse orientiert.

Transversalfluss-Motoren umfassen regelmäßig einen Stator und einen Rotor. Rotor und Stator sind insbesondere in einer radialen Richtung hintereinander angeordnet (also z. B. Rotor innen und Stator außen oder umgekehrt. Dabei sind unterschiedlich magnetisierte Magnete entlang der Umfangsrichtung abwechselnd auf dem Rotor angeordnet. Die Magnetfeldlinien eines Transversalfluss-Motors verlaufen im Wesentlichen parallel zur Drehachse in axialer Richtung, das Magnetfeld ist also im Wesentlichen parallel zur Drehachse orientiert. Der magnetische Fluss verläuft dabei dreidimensional auch in radialer Richtung und in Umfangsrichtung.

Der Aufbau eines Klauenpol-Stators eines Transversalfluss-Motors wird nachfolgend beispielhaft erläutert. Es werden zwei Klauenpol-Statoren entlang der axialen Richtung nebeneinander angeordnet, wobei sie über die Stirnflächen einander kontaktieren. Jeder Klauenpol-Stator weist eine Vielzahl von Polen auf, die sich ausgehend von einer Grundfläche entlang der axialen Richtung erstrecken. Erste Pole des ersten Klauenpol-Stators und zweite Pole des zweiten Klauenpol-Stators sind entlang der Umfangsrichtung wechselweise und jeweils benachbart zueinander und in der axialen Richtung einander überlappend, aber beabstandet zueinander, angeordnet. Die Pole können an der Innenumfangsfläche oder an der Außenumfangsfläche angeordnet sein. Die Klauenpol-Statoren kontaktieren dann einander über die Stirnflächen an der Außenumfangsfläche oder an der Innenumfangsfläche. In dem Zwischenraum der Klauenpol-Statoren, in der axialen Richtung zwischen den Stirnflächen und in der radialen Richtung zwischen den sich kontaktierenden Stirnflächen und den Polen kann eine Spule in der Umfangsrichtung umlaufend zwischen den Klauenpol-Statoren angeordnet werden.

Eine elektrische Maschine mit Kernen aus Soft Magnetic Composite (SMC) ist aus der WO 2016/066714 A1 bekannt. Die dort im Rotor eingesetzten Permanentmagnete sind in einer Richtung parallel zur Drehachse, also in der axialen Richtung, magnetisiert, d. h. die Flusslinien des magnetischen Feldes treten in axialer Richtung aus dem jeweiligen Permanentmagneten aus.

Die Spulenanordnung eines Stators weist Kerne, z. B. aus SMC auf, die von stromführenden Wicklungen umfasst sind. Jeder Kern kann ein Element sein, das angeordnet ist, um magnetisiert zu werden, wenn ein Strom durch stromführende Wicklungen um den Kern geleitet wird. Die stromführenden Wicklungen können als Spulen gestaltet sein. Jede Spule kann einen Innendurchmesser aufweisen, der im Wesentlichen gleich einem Außendurchmesser jedes Kerns ist.

SMC ist insbesondere aus Eisenpulverteilchen gebildet, die elektrisch voneinander isoliert sind. Eisenverluste in SMC-Teilen in einem elektrischen Wechselfeld sind im Allgemeinen gering. In dieser Hinsicht erscheint es daher wünschenswert, SMC in elektrischen Maschinen zumindest teilweise anstelle der am häufigsten verwendeten Stahllamination (Stahlbleche bzw. Elektrostahl) zu verwenden. Um eine Komponente aus SMC zu bilden, werden die Partikel verdichtet und gehärtet. Das SMC-Material wird hierbei nicht gesintert. Vielmehr erfolgt eine Temperierung auf unterhalb einer Schmelztemperatur, die jedoch ausreichend ist, dass das Material die vorgesehene Geometrie dauerhaft bewahrt.

Der Rotor des elektrischen Antriebs (also des Axialfluss-Elektroantriebs, des Radialfluss-Motors und des Transversalfluss-Motors) kann Permanentmagnete oder auch weichmagnetische Elemente zum Beispiel in Aussparungen aufweisen. So kann mit Permanentmagneten als elektrischer Antrieb (insbesondere ein Axialfluss-Elektromotor, ein Radialfluss-Elektromotor oder ein Transversalfluss-Motor) ein permanenterregter Synchron- oder bürstenloser Gleichstrommotor, abgekürzt BLDC, gebildet werden, während beispielsweise mit weichmagnetischen Elementen ein Reluktanzmotor als Elektromotor in axialer, radialer oder transversaler Bauweise geschaffen werden kann.

Aus US 9,246,364 B2 ist ein Rotor mit Permanentmagneten für einen Axialfluss-motor bekannt. Der Rotorkern besteht aus SMC-Material, in dem die Magneten eingebettet angeordnet sind.

Es besteht ein ständiges Bedürfnis, die Leistungsfähigkeit elektrischer Maschinen zu steigern.

Hiervon ausgehend ist es Aufgabe der vorliegenden Erfindung, die mit Bezug auf den Stand der Technik geschilderten Probleme zumindest teilweise zu lösen. Insbesondere soll ein Rotor für einen elektrischen Antrieb (für einen Axialfluss-Motor, einen Radialfluss-Motor und einen Transversalfluss-Motor) vorgeschlagen werden, der eine höhere Effektivität aufweist.

Zur Lösung dieser Aufgabe wird ein Rotor gemäß den Merkmalen des Patentanspruchs 1 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Hierzu trägt ein Rotor für einen Axialfluss-Motor, einen Radialfluss-Motor oder einen Transversalfluss-Motor, mit einer sich entlang einer axialen Richtung erstreckenden Drehachse bei, wobei sich der Rotor ringförmig erstreckt und entlang einer Umfangsrichtung eine Vielzahl von Permanentmagneten (der Begriff umfasst hier insbesondere auch weichmagnetische Elemente) aufweist. Die Permanentmagnete sind bevorzugt entlang der Umfangsrichtung abwechselnd unterschiedlich magnetisiert (erste Permanentmagnete mit erster Magnetisierung und zweiten Permanentmagnete mit zweiter Magnetisierung). Die Magnetisierung der Permanentmagnete ist jeweils in Umfangsrichtung orientiert, wobei die Permanentmagneten entlang der Umfangsrichtung jeweils voneinander beabstandet angeordnet sind, wobei zwischen den Permanentmagneten zumindest ein Soft Magnetic Composite als ein erstes Material angeordnet ist.

Die Permanentmagnete sind nicht in axialer Richtung magnetisiert, sondern in Umfangsrichtung. Das heißt, dass ein größter Anteil der Flusslinien des Magnetfeldes jedes Permanentmagneten im Wesentlichen in Umfangsrichtung aus dem jeweiligen Permanentmagneten austreten.

Zwischen den Permanentmagneten ist ein erstes Material angeordnet, dass zur Konzentration der Flusslinien (Erhöhung der Flussdichte, Verringerung der Wirbelstromverluste) dienen kann.

Die in Umfangsrichtung aus den Permanentmagneten austretenden Flusslinien des magnetischen Feldes werden insbesondere durch das sich in Umfangsrichtung anschließende erste Material hin zum benachbarten Magneten geleitet.

Zwischen den Permanentmagneten ist zusätzlich ein eisenhaltiges Material als ein zweites Material angeordnet.

Bevorzugt ist das zweite Material ein gesintertes eisenhaltiges Material oder ein Elektrostahl-Material.

Durch die Kombination von erstem Material und zweitem Material Eisenverluste aufgrund von an den Oberflächen des ersten Materials und/oder des zweiten Materials auftretenden elektrischen Wirbelstromverlusten vermieden bzw. verringert werden.

Für den Axialfluss-Motor sind das erste Material und das zweite Material schichtförmig angeordnet und dabei entlang der axialen Richtung hintereinander. Insbesondere ist also entlang der axialen Richtung zunächst das eine Material und dann das andere Material angeordnet.

Für den Radialfluss-Motor und/oder einen Transversalfluss-Motor sind das erste Material und das zweite Material schichtförmig angeordnet und dabei entlang einer radialen Richtung hintereinander. Insbesondere ist also entlang der radialen Richtung zunächst das eine Material und dann das andere Material angeordnet.

Bei der Anordnung des Rotors an einem Stator zur Ausbildung einer elektrischen Maschine ist das erste Material insbesondere hin zum Stator angeordnet.

Insbesondere ist für den Radialfluss-Motor und/oder den Transversalfluss-Motor das erste Material in der radialen Richtung benachbart zu einem Stator des Radialfluss-Motors und des Transversalfluss-Motors angeordnet ist. Insbesondere ist das zweite Material gegenüber dem Stator beabstandet angeordnet. Insbesondere ist zwischen dem zweiten Material und dem Stator das erste Material angeordnet.

Insbesondere weist für den Axialfluss-Motor das erste Material und das zweite Material zusammen entlang der axialen Richtung eine Gesamthöhe auf, wobei das erste Material sich über eine erste Höhe erstreckt, die zumindest 10 %, insbesondere zumindest 20 %, bevorzugt zumindest 40 % der Gesamthöhe beträgt.

Bevorzugt weist das erste Material eine erste Höhe auf, die höchstens 90 %, insbesondere höchstens 80 % der Gesamthöhe beträgt.

Insbesondere weist für den Radialfluss-Motor und/oder den Transversalfluss-Motor das erste Material und das zweite Material zusammen entlang der radialen Richtung eine Gesamthöhe auf, wobei das erste Material sich über eine erste Höhe erstreckt, die zumindest 10 %, insbesondere zumindest 20 %, bevorzugt zumindest 40 % der Gesamthöhe beträgt.

Bevorzugt weist das erste Material eine erste Höhe auf, die höchstens 90 %, insbesondere höchstens 80 % der Gesamthöhe beträgt.

Insbesondere weisen die Permanentmagnete für den Axialfluss-Motor entlang der axialen Richtung eine Erstreckung auf, die (im Wesentlichen) der Gesamthöhe entspricht. Insbesondere weisen die Permanentmagnete für den Radialfluss-Motor und/oder den Transversalfluss-Motor entlang der radialen Richtung eine Erstreckung auf, die (im Wesentlichen) der Gesamthöhe entspricht.

Insbesondere erstrecken sich die Permanentmagneten in einer radialen Richtung zumindest teilweise (insbesondere vollständig) weiter nach außen als das erste Material (und ggf. als das zweite Material).

Insbesondere erstrecken sich die Permanentmagneten in einer radialen Richtung zumindest teilweise (insbesondere vollständig) weiter nach innen als das erste Material (und ggf. als das zweite Material).

Weiter wird ein elektrischer Antrieb in Form eines Axialfluss-Motors, eines Radialfluss-Motors oder eines Transversalfluss-Motors vorgeschlagen, zumindest umfassend einen Stator und den bereits beschriebenen Rotor, wobei der Stator eine Vielzahl von Kernen aufweist, die von Spulen umgeben sind.

Insbesondere weist der Stator ein Soft Magnetic Composite auf.

Die Anzahl der Kerne (bzw. der Spulen) kann anders sein als die Anzahl der Permanentmagnete.

Die Ausführungen zu dem Rotor gelten gleichermaßen für den elektrischen Antrieb (bzw. für den Axialfluss-Motor, den Radialfluss-Motor und den Transversalfluss-Motor) sowie umgekehrt.

Vorsorglich sei angemerkt, dass die hier verwendeten Zahlwörter ("erste", "zweite",...) vorrangig (nur) zur Unterscheidung von mehreren gleichartigen Gegenständen oder Größen dienen, also insbesondere keine Abhängigkeit und/oder Reihenfolge dieser Gegenstände oder Größen zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine erste Ausführungsvariante eines Axialfluss-Motors in einer perspektivischen Ansicht;
- Fig. 2:: den Rotor des Axialfluss-Motors nach Fig. 1 in einer perspektivischen Ansicht;
- Fig. 3:: den Rotor nach Fig. 2 in einer Seitenansicht;
- Fig. 4:: den Rotor nach Fig. 2 und 3 in einer Ansicht entlang der Drehachse; und
- Fig. 5:: ein Diagramm, in dem Wirbelstromverluste und das erzeugbare Drehmoment in Abhängigkeit von einer Verteilung von erstem Material und zweitem Material dargestellt ist;
- Fig. 6:: eine zweite Ausführungsvariante eines Axialfluss-Motors in einer ersten perspektivischen Ansicht;
- Fig. 7:: den Axialfluss-Motor aus Fig. 6 in einer zweiten perspektivischen Ansicht;
- Fig. 8:: einen Verlauf des magnetischen Flusses bei einem Radialfluss-Motor und einem Transversalfluss-Motors und einem zeitlich variierenden Magnetfeld zu einem Zeitpunkt;
- Fig. 9:: einen Radialfluss-Motor aus Fig. 8 in einer Seitenansicht entlang der Drehachse;
- Fig. 10:: den Radialfluss-Motor nach Fig. 9 in einer perspektivischen Ansicht;
- Fig. 11:: einen Ausschnitt eines Transversalfluss-Motors in einer Seitenansicht entlang der Drehachse;
- Fig. 12:: den Ausschnitt nach Fig. 11 in einer ersten perspektivischen Ansicht;
- Fig. 13:: den Ausschnitt nach Fig. 11 und 12 in einer zweiten perspektivischen Ansicht.

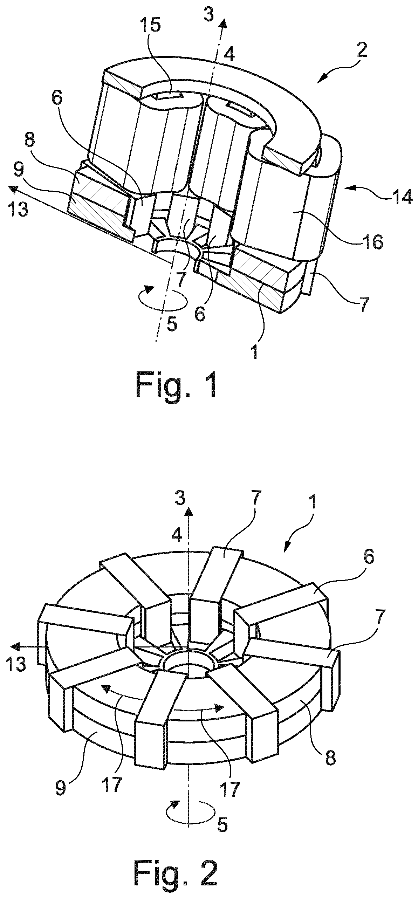

Fig. 1 zeigt eine erste Ausführungsvariante eines Axialfluss-Motors 2 mit einer Drehachse 4 in einer perspektivischen Ansicht. Der Axialfluss-Motor 2 umfasst einen Stator 14 und einen Rotor 1, wobei der Stator 14 eine Vielzahl von Kernen 15 aufweist, die von Spulen 16 umgeben sind. Die Kerne 15 sind aus zumindest teilweise aus dem ersten Material 8 hergestellt.

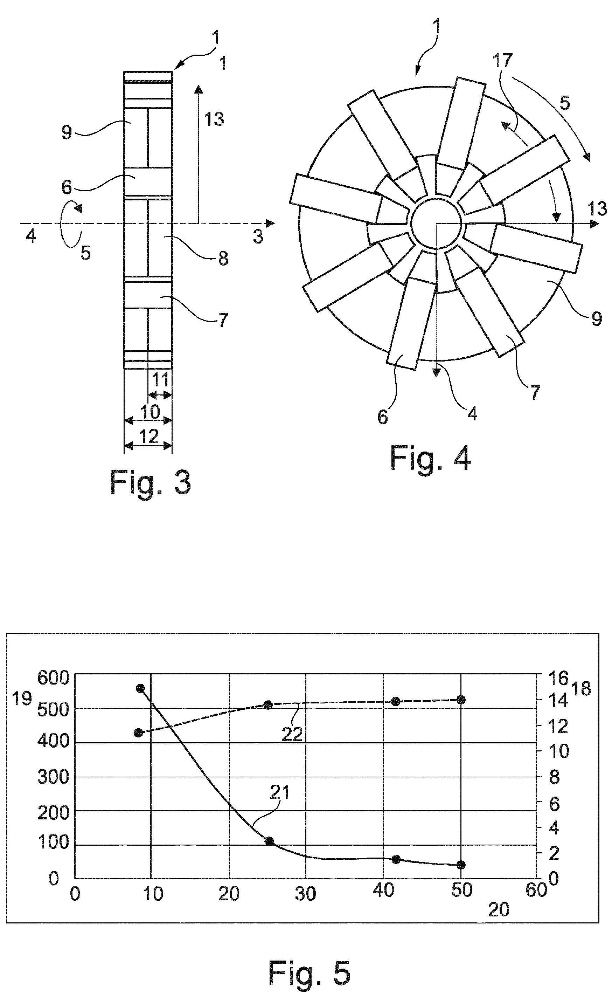

Fig. 2 zeigt den Rotor 1 des Axialfluss-Motors 2 nach Fig. 1 in einer perspektivischen Ansicht. Fig. 3 zeigt den Rotor 1 nach Fig. 2 in einer Seitenansicht. Fig. 4 zeigt den Rotor 1 nach Fig. 2 und 3 in einer Ansicht entlang der Drehachse 4. Die Fig. 2 bis 4 werden im Folgenden gemeinsam beschrieben.

Der Rotor 1 weist eine sich entlang einer axialen Richtung 3 erstreckenden Drehachse 4 auf, wobei sich der Rotor 1 ringförmig erstreckt und entlang einer Umfangsrichtung 5 eine Vielzahl von ersten Permanentmagneten 6 (mit einer ersten Magnetisierung) und zweiten Permanentmagneten 7 (mit einer von der ersten Magnetisierung unterschiedlichen zweiten Magnetisierung) aufweist. Die Permanentmagnete 6, 7 sind entlang der Umfangsrichtung 5 abwechselnd unterschiedlich magnetisiert. Die Magnetisierung der Permanentmagnete 6, 7 ist jeweils in Umfangsrichtung 5 orientiert, d. h. die Richtung der Flusslinien 17 (beim Austritt aus dem bzw. Eintritt in den Permanentmagneten) ist in der Umfangsrichtung 5 orientiert. Die Permanentmagneten 6, 7 sind entlang der Umfangsrichtung 5 jeweils voneinander beabstandet angeordnet, wobei zwischen den Permanentmagneten 6, 7 ein Soft Magnetic Composite als ein erstes Material 8 angeordnet ist.

Zwischen den Permanentmagneten 6, 7 ist zusätzlich ein eisenhaltiges Material als ein zweites Material 9 angeordnet. Das erste Material 8 und das zweite Material 9 sind schichtförmig angeordnet und dabei entlang der axialen Richtung 3 hintereinander. Entlang der axialen Richtung 3 ist zunächst das erste Material 8 und dann das andere Material 9 angeordnet.

Das erste Material 8 und das zweite Material 9 weisen zusammen entlang der axialen Richtung 3 eine Gesamthöhe 10 auf, wobei das erste Material 8 sich hier über eine erste Höhe 11 erstreckt, die ungefähr 50 % der Gesamthöhe 10 beträgt.

Die Permanentmagnete 6, 7 weisen entlang der axialen Richtung 3 eine Erstreckung 12 auf, die der Gesamthöhe 10 entspricht.

Die Permanentmagneten 6, 7 erstrecken sich in einer radialen Richtung 13 sowohl weiter nach außen als auch weiter nach innen als das erste Material 8.

Fig. 5 zeigt ein Diagramm, in dem Wirbelstromverluste 18 [Watt] (vertikale Achse) und das erzeugbare Drehmoment 19 [mNm] (Milli-Newtonmeter) (vertikale Achse) in Abhängigkeit von einer Verteilung von erstem Material und zweitem Material (Verhältnis 20 von erste Höhe 11 zu Gesamthöhe 10 [%]; horizontale Achse) dargestellt ist.

Die erste Kurve 21 zeigt den Verlauf der Wirbelstromverluste 18 in Abhängigkeit von dem Verhältnis 20. Die zweite Kurve 22 zeigt den Verlauf des erreichbaren Drehmoments 19 in Abhängigkeit von dem Verhältnis 20.

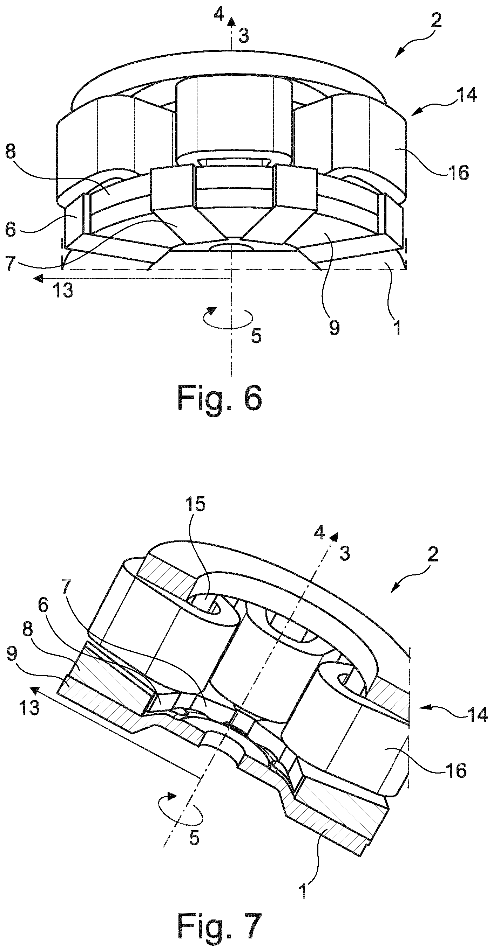

Fig. 6 zeigt eine zweite Ausführungsvariante eines Axialfluss-Motors 2 in einer ersten perspektivischen Ansicht. Fig. 7 zeigt den Axialfluss-Motor 2 in einer zweiten perspektivischen Ansicht. Auf die Ausführungen zu Fig. 1 bis 4 wird verwiesen.

Bei dem Axialfluss-Motor 2 sind Rotor 1 und Stator 14 entlang der axialen Richtung 3 hintereinander angeordnet. Dabei sind unterschiedlich magnetisierte Permanentmagnete 6, 7 entlang der Umfangsrichtung 5 abwechselnd auf dem Rotor 1 angeordnet. Die Magnetfeldlinien eines Axialfluss-Motors 2 verlaufen im Wesentlichen parallel zur Drehachse 4 in axialer Richtung 3, das Magnetfeld ist also im Wesentlichen parallel zur Drehachse 4 orientiert.

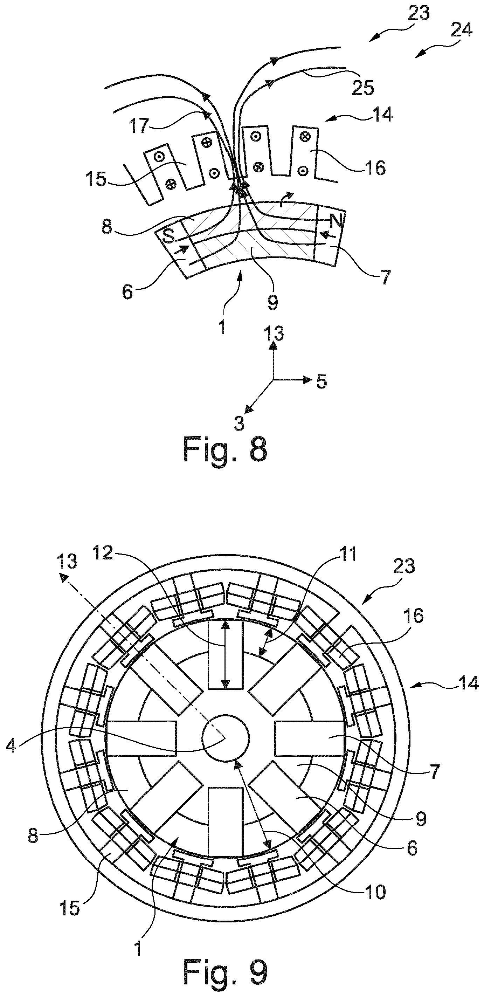

Fig. 8 zeigt einen Verlauf des magnetischen Flusses bzw. der Magnetfeldlinien 25 bei einem Radialfluss-Motor 23 und einem Transversalfluss-Motors 24 und einem zeitlich variierenden Magnetfeld zu einem Zeitpunkt. Der Stator 14 ist ohne Spulen 16 dargestellt, wobei die wechselnde Polarität des zeitvariablen Magnetfelds für einen Zeitpunkt durch die +/-Symbolik dargestellt ist. Der Rotor 1 weist eine sich entlang einer axialen Richtung 3 erstreckenden Drehachse 4 auf, wobei sich der Rotor 1 ringförmig erstreckt und entlang einer Umfangsrichtung 5 eine Vielzahl von ersten Permanentmagneten 6 (mit einer ersten Magnetisierung) und zweiten Permanentmagneten 7 (mit einer von der ersten Magnetisierung unterschiedlichen zweiten Magnetisierung) aufweist. Die Permanentmagnete 6, 7 sind entlang der Umfangsrichtung 5 abwechselnd unterschiedlich magnetisiert. Die Magnetisierung der Permanentmagnete 6, 7 ist jeweils in Umfangsrichtung 5 orientiert, d. h. die Richtung der Flusslinien 17 (beim Austritt aus dem bzw. Eintritt in den Permanentmagneten) ist in der Umfangsrichtung 5 orientiert. Die Permanentmagneten 6, 7 sind entlang der Umfangsrichtung 5 jeweils voneinander beabstandet angeordnet, wobei zwischen den Permanentmagneten 6, 7 in der radialen Richtung 13 außen ein Soft Magnetic Composite als ein erstes Material 8 und in der radialen Richtung 13 innen ein zweites Material 9 angeordnet ist.

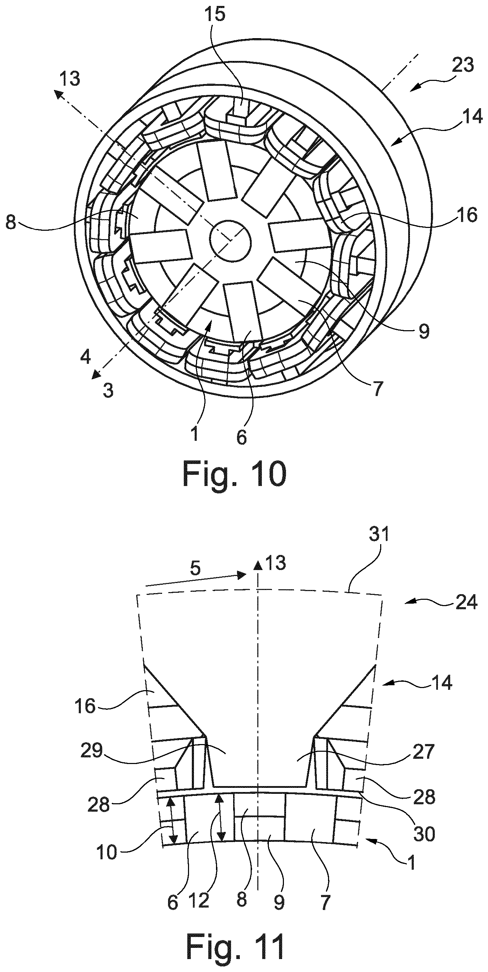

Fig. 9 zeigt einen Radialfluss-Motor 23 in einer Seitenansicht entlang der Drehachse 4. Fig. 10 zeigt den Radialfluss-Motor 23 nach Fig. 9 in einer perspektivischen Ansicht. Die Fig. 9 und 10 werden im Folgenden gemeinsam beschrieben. Auf die Ausführungen zu Fig. 8 wird verwiesen.

Bei einem Radialfluss-Motor 23 sind Rotor 1 und Stator 14 in einer radialen Richtung 13 hintereinander angeordnet (also hier Rotor 1 innen und Stator 14). Dabei sind unterschiedlich magnetisierte Permanentmagnete 6, 7 entlang der Umfangsrichtung 5 abwechselnd auf dem Rotor 1 angeordnet. Die Magnetfeldlinien 25 eines Radialfluss-Motors 23 verlaufen im Wesentlichen quer zur Drehachse 4 in radialer Richtung 13, das Magnetfeld ist also im Wesentlichen quer zur Drehachse 4 orientiert.

Für den Radialfluss-Motor 23 sind das erste Material 8 und das zweite Material 9 schichtweise angeordnet und dabei entlang einer radialen Richtung 13 hintereinander. Hier ist also ausgehend von innen und entlang der radialen Richtung 13 nach außen zunächst das zweite Material 9 und dann das erste Material 8 angeordnet.

Bei der Anordnung des Rotors 1 an dem Stator 14 ist zur Ausbildung einer elektrischen Maschine das erste Material 8 hin zum Stator 14 angeordnet.

Für den Radialfluss-Motor 23 ist das erste Material 8 in der radialen Richtung 13 benachbart zu dem Stator 14 des Radialfluss-Motors 23 angeordnet. Das zweite Material 9 ist gegenüber dem Stator 14 beabstandet angeordnet. Zwischen dem zweiten Material 9 und dem Stator 14 ist das erste Material 8 angeordnet.

Für den Radialfluss-Motor 23 weist das erste Material 8 und das zweite Material 9 zusammen entlang der radialen Richtung 13 eine Gesamthöhe 10 auf, wobei das erste Material 8 sich über eine erste Höhe 11 erstreckt.

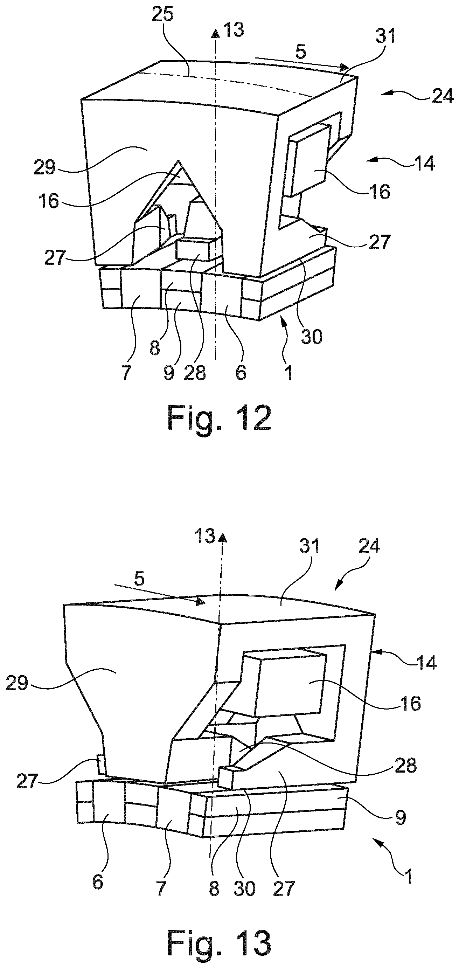

Fig. 11 zeigt einen Ausschnitt eines Transversalfluss-Motors 24 in einer Seitenansicht entlang der Drehachse 4. Fig. 12 zeigt den Ausschnitt nach Fig. 11 in einer ersten perspektivischen Ansicht. Fig. 13 zeigt den Ausschnitt nach Fig. 11 und 12 in einer zweiten perspektivischen Ansicht. Die Fig. 11 bis 13 werden im Folgenden gemeinsam beschrieben.

Transversalfluss-Motoren 24 umfassen regelmäßig einen Stator 14 und einen Rotor 1. Rotor 1 und Stator 14 sind in einer radialen Richtung 13 hintereinander angeordnet (also hier Rotor 1 innen und Stator 14 außen). Dabei sind unterschiedlich magnetisierte Permanentmagnete 6, 7 entlang der Umfangsrichtung 5 abwechselnd auf dem Rotor 1 angeordnet. Die Magnetfeldlinien 25 eines Transversalfluss-Motors 24 verlaufen im Wesentlichen parallel zur Drehachse 4 in axialer Richtung 3, das Magnetfeld ist also im Wesentlichen parallel zur Drehachse 4 orientiert. Der magnetische Fluss verläuft dabei dreidimensional auch in radialer Richtung 13 und in Umfangsrichtung 5.

Für einen Klauenpol-Stator 14 werden zwei Klauenpol-Statoren 14 entlang der axialen Richtung 3 nebeneinander angeordnet, wobei sie über die Stirnflächen 25 einander kontaktieren (Stirnflächen 25 in Fig. 12 angedeutet) oder bereits einteilig ausgeführt sind (siehe Fig. 13). Jeder Klauenpol-Stator 14 weist eine Vielzahl von Polen 27, 28 auf, die sich ausgehend von einer Grundfläche 29 entlang der axialen Richtung 3 erstrecken. Erste Pole 27 des ersten Klauenpol-Stators 14 und zweite Pole 28 des zweiten Klauenpol-Stators 14 sind entlang der Umfangsrichtung 5 wechselweise und jeweils benachbart zueinander und in der axialen Richtung 3 einander überlappend, aber beabstandet zueinander, angeordnet. Die Pole 27, 28 sind an der Innenumfangsfläche 30 angeordnet. Die Klauenpol-Statoren 14 kontaktieren einander über die Stirnflächen 25 an der Außenumfangsfläche 31 (siehe Fig. 12 bzw. sind einteilig ausführt, siehe Fig. 13). In dem Zwischenraum der Klauenpol-Statoren 14, in der axialen Richtung 3 zwischen den Stirnflächen 25 und in der radialen Richtung 13 zwischen den sich kontaktierenden Stirnflächen 25 und den Polen 27, 28 ist eine Spule 16 in der Umfangsrichtung 5 umlaufend zwischen den Klauenpol-Statoren 14 angeordnet.

Für den Transversalfluss-Motor 24 sind das erste Material 8 und das zweite Material 9 schichtweise angeordnet und dabei entlang einer radialen Richtung 13 hintereinander. Hier ist also ausgehend von innen und entlang der radialen Richtung 13 nach außen zunächst das zweite Material 9 und dann das erste Material 8 angeordnet.

Bei der Anordnung des Rotors 1 an dem Stator 14 ist zur Ausbildung einer elektrischen Maschine das erste Material 8 hin zum Stator 14 angeordnet.

Für den Transversalfluss-Motor 24 ist das erste Material 8 in der radialen Richtung 13 benachbart zu dem Stator 14 des Transversalfluss-Motors 24 angeordnet. Das zweite Material 9 ist gegenüber dem Stator 14 beabstandet angeordnet. Zwischen dem zweiten Material 9 und dem Stator 14 ist das erste Material 8 angeordnet.

Für den Transversalfluss-Motor 24 weist das erste Material 8 und das zweite Material 9 zusammen entlang der radialen Richtung 13 eine Gesamthöhe 10 auf, wobei das erste Material 8 sich über eine erste Höhe 11 erstreckt.

### Bezugszeichenliste

- 1: Rotor
- 2: Axialfluss-Motor
- 3: axiale Richtung
- 4: Drehachse
- 5: Umfangsrichtung
- 6: erster Permanentmagnet
- 7: zweiter Permanentmagnet
- 8: erstes Material
- 9: zweites Material
- 10: Gesamthöhe
- 11: erste Höhe
- 12: Erstreckung
- 13: radiale Richtung
- 14: Stator
- 15: Kern
- 16: Spule
- 17: Richtung der Flusslinien
- 18: Wirbelstromverlust [Watt]
- 19: Drehmoment [mNm]
- 20: Verhältnis erste Höhe/Gesamthöhe [%]
- 21: erste Kurve
- 22: zweite Kurve
- 23: Radialfluss-Motor
- 24: Transversalfluss-Motor
- 25: Magnetfeldlinie
- 26: Stirnfläche
- 27: erster Pol
- 28: zweiter Pol
- 29: Grundfläche
- 30: Innenumfangsfläche
- 31: Außenumfangsfläche

## Patentansprüche

1. Rotor (1) für einen Axialfluss-Motor (2), einen Radialfluss-Motor (23) oder einen Transversalfluss-Motor (24), mit einer sich entlang einer axialen Richtung (3) erstreckenden Drehachse (4), wobei sich der Rotor (1) ringförmig erstreckt und entlang einer Umfangsrichtung (5) eine Vielzahl von Permanentmagneten (6, 7) aufweist, wobei die Permanentmagneten (6, 7) entlang der Umfangsrichtung (5) jeweils voneinander beabstandet angeordnet sind, wobei entlang der Umfangsrichtung (5) zwischen den Permanentmagneten (6, 7) ein erstes Material (8) zumindest umfassend ein Soft Magnetic Composite angeordnet ist; wobei entlang der Umfangsrichtung (5) zwischen den Permanentmagneten (6, 7) zusätzlich ein zweites Material (9) umfassend ein eisenhaltiges Material angeordnet ist; wobei zumindest das erste Material (8) einer Konzentration der in der Umfangsrichtung (5) aus den Permanentmagneten (6, 7) austretenden Flusslinien dient; wobei für den Axialfluss-Motor (2) das erste Material (8) und das zweite Material (9) schichtförmig und die zwei Schichten entlang der axialen Richtung (3) hintereinander angeordnet sind; wobei für den Radialfluss-Motor (23) und den Transversalfluss-Motor (24) das erste Material (8) und das zweite Material (9) schichtförmig und die zwei Schichten entlang einer radialen Richtung (13) hintereinander angeordnet sind; wobei die Magnetisierung jedes Permanentmagneten (6, 7) des Rotors (1) jeweils in der Umfangsrichtung (5) orientiert ist, so dass zumindest ein größter Anteil der Flusslinien des Magnetfeldes jedes Permanentmagneten (6, 7) im Wesentlichen in der Umfangsrichtung (5) aus dem jeweiligen Permanentmagneten (6, 7) austreten; wobei durch die Kombination von erstem Material (8) und zweitem Material (9) Eisenverluste aufgrund von an den Oberflächen des ersten Materials (8) und/oder des zweiten Materials (9) auftretenden elektrischen Wirbelstromverlusten zumindest verringert werden.

2. Rotor (1) nach Patentanspruch 1, wobei das zweite Material (9) ein gesintertes eisenhaltiges Material oder ein Elektrostahl-Material ist.

3. Rotor (1) nach einem der vorhergehenden Patentansprüche, wobei für den Axialfluss-Motor (2) das erste Material (8) und das zweite Material (9) zusammen entlang der axialen Richtung (3) eine Gesamthöhe (10) aufweisen, wobei das erste Material (8) sich über eine erste Höhe (11) erstreckt, die zumindest 10 % der Gesamthöhe (10) beträgt; wobei für den Radialfluss-Motor (23) und den Transversalfluss-Motor (24) das erste Material (8) und das zweite Material (9) zusammen entlang einer radialen Richtung (3) eine Gesamthöhe (10) aufweisen, wobei das erste Material (8) sich über eine erste Höhe (11) erstreckt, die zumindest 10 % der Gesamthöhe (10) beträgt;.

4. Rotor (1) nach Patentanspruch 3, wobei für den Axialfluss-Motor (2) die Permanentmagnete (6, 7) entlang der axialen Richtung (3) eine Erstreckung (12) aufweisen, die der Gesamthöhe (10) entspricht; wobei für den Radialfluss-Motor (23) und den Transversalfluss-Motor (24) die Permanentmagnete (6, 7) entlang der radialen Richtung (13) eine Erstreckung (12) aufweisen, die der Gesamthöhe (10) entspricht.

5. Rotor (1) nach einem der vorhergehenden Patentansprüche, wobei sich die Permanentmagnete (6, 7) in einer radialen Richtung (13) zumindest teilweise weiter nach außen erstrecken als das erste Material (8).

6. Rotor (1) nach einem der vorhergehenden Patentansprüche, wobei sich die Permanentmagneten (6, 7) in einer radialen Richtung (13) zumindest teilweise weiter nach innen erstrecken als das erste Material (8).

7. Rotor (1) nach einem der vorhergehenden Patentansprüche, wobei für den Radialfluss-Motor (23) und den Transversalfluss-Motor (24) das erste Material (8) in der radialen Richtung (13) benachbart zu einem Stator (14) des Radialfluss-Motors (23) und des Transversalfluss-Motors (24) angeordnet ist.

8. Elektrischer Antrieb in Form eines Axialflussmotors (2), eines Radialfluss-motors (23) oder eines Transversalfluss-Motors (24), zumindest umfassend einen Stator (14) und einen Rotor (1) nach einem der vorhergehenden Patentansprüche, wobei der Stator (14) eine Vielzahl von Kernen (15) aufweist, die von Spulen (16) umgeben sind.

9. Elektrischer Antrieb nach Patentanspruch 8, wobei der Stator (14) ein Soft Magnetic Composite aufweist.

## Claims

1. Rotor (1) for an axial flux motor (2), a radial flux motor (23) or a transversal flux motor (24), having a rotation axis (4) which extends in an axial direction (3), wherein the rotor (1) extends in an annular manner and has in a peripheral direction (5) a large number of permanent magnets (6, 7), wherein the permanent magnets (6, 7) are arranged spaced apart from each other in the peripheral direction (5), wherein in the peripheral direction (5) a first material (8) at least comprising a soft magnetic composite is arranged between the permanent magnets (6, 7); wherein in the peripheral direction (5) a second material (9) comprising an iron-containing material is further arranged between the permanent magnets (6, 7); wherein at least the first material (3) serves for a concentration of the flux lines being discharged in the peripheral direction (5) from the permanent magnets (6, 7); wherein for the axial flux motor (2) the first material (8) and the second material (9) are arranged in layers and the two layers are arranged one behind the other in the axial direction (3); wherein for the radial flux motor (23) and the transversal flux motor (24) the first material (8) and the second material (9) are arranged in layers and the two layers are arranged in a radial direction (13) one behind the other; wherein the magnetization of each of the permanent magnets (6, 7) of the rotor (1) is orientated in each case in the peripheral direction (5), so that at least a majority of the flux lines of the magnetic field of each permanent magnet (6, 7) are discharged substantially in the peripheral direction (5) from the respective permanent magnet (6, 7); wherein as a result of the combination of the first material (8) and second material (9), iron losses as a result of electric eddy current losses which occur on the surfaces of the first material (8) and/or the second material (9) can be at least reduced.

2. Rotor (1) according to claim 1, wherein the second material (9) is a sintered iron-containing material or an electric steel material.

3. Rotor (1) as claimed in one of the preceding claims, wherein for the axial flux motor (2) the first material (8) and the second material (9) have together in the axial direction (3) an overall height (10), wherein the first material (8) extends over a first height (11) which is at least 10 % of the overall height (10); wherein for the radial flux motor (23) and the transversal flux motor (24) the first material (8) and the second material (9) together have an overall height (10) in a radial direction (3), wherein the first material (8) extends over a first height (11) which is at least 10 % of the overall height (10).

4. Rotor (1) as claimed in claim 3, wherein for the axial flux motor (2) the permanent magnets (6, 7) have in the axial direction (3) an extent (12) which corresponds to the overall height (10); wherein for the radial flux motor (23) and the transversal flux motor (24) the permanent magnets (6, 7) have in the radial direction (13) an extent (12) which corresponds to the overall height (10).

5. Rotor (1) as claimed in one of the preceding claims, wherein the permanent magnets (6, 7) extend in a radial direction (13) at least partially further outward than the first material (8).

6. Rotor (1) as claimed in one of the preceding claims, wherein the permanent magnets (6, 7) extend in a radial direction (13) at least partially further inward than the first material (8).

7. Rotor (1) as claimed in one of the preceding claims, wherein for the radial flux motor (23) and the transversal flux motor (24) the first material (8) is arranged in the radial direction (13) adjacent to a stator (14) of the radial flux motor (23) and the transversal flux motor (24).

8. Electric drive in the form of an axial flux motor (2), a radial flux motor (23) or a transversal flux motor (24), at least comprising a stator (14) and a rotor (1) as claimed in one of the preceding claims, wherein the stator (14) has a large number of cores (15) which are surrounded by coils (16).

9. Electric drive as claimed in claim 8, wherein the stator (14) has a soft magnetic composite.

## Revendications

1. Rotor (1) pour un moteur à flux axial (2), un moteur à flux radial (23) ou un moteur à flux transversal (24), comprenant un axe de rotation (4) qui s'étend le long d'une direction axiale (3), le rotor (1) s'étendant de façon annulaire et possédant une pluralité d'aimants permanents (6, 7) le long d'une direction circonférentielle (5), les aimants permanents (6, 7) le long de la direction circonférentielle (5) étant disposés respectivement espacés les uns des autres, un premier matériau (8) comprenant au moins un composite magnétique tendre étant disposé le long de la direction circonférentielle (5) entre les aimants permanents (6, 7) ; un deuxième matériau (9) comprenant un matériau contenant du fer étant en plus disposé le long de la direction circonférentielle (5) entre les aimants permanents (6, 7) ; au moins le premier matériau (8) servant à une concentration des lignes de flux qui sortent des aimants permanents (6, 7) dans la direction circonférentielle (5) ; pour le moteur à flux axial (2), le premier matériau (8) et le deuxième matériau (9) étant sous forme de couches et les deux couches étant disposées l'une derrière l'autre le long de la direction axiale (3) ; pour le moteur à flux radial (23) et le moteur à flux transversal (24), le premier matériau (8) et le deuxième matériau (9) étant sous forme de couches et les deux couches étant disposées l'une derrière l'autre le long d'une direction radiale (13) ; l'aimantation de chaque aimant permanent (6, 7) du rotor (1) étant orientée respectivement dans la direction circonférentielle (5), de sorte qu'au moins une part la plus grande des lignes de flux du champ magnétique de chaque aimant permanent (6, 7) sort de l'aimant permanent (6, 7) respectif sensiblement dans la direction circonférentielle (5) ; la combinaison du premier matériau (8) et du deuxième matériau (9) permettant de réduire au moins les pertes par inversion magnétique en raison des pertes par courant de Foucault électriques qui se produisent sur les surfaces du premier matériau (8) et/ou du deuxième matériau (9).

2. Rotor (1) selon la revendication 1, le deuxième matériau (9) étant un matériau ferreux fritté ou un matériau en acier électrique.

3. Rotor (1) selon l'une des revendications précédentes, pour le moteur à flux axial (2), le premier matériau (8) et le deuxième matériau (9) présentent conjointement une hauteur totale (10) le long de la direction axiale (3), le premier matériau (8) s'étendant sur une première hauteur (11), qui représente au moins 10 % de la hauteur totale (10) ; pour le moteur à flux radial (23) et le moteur à flux transversal (24), le premier matériau (8) et le deuxième matériau (9) présentent conjointement une hauteur totale (10) le long d'une direction radiale (3), le premier matériau (8) s'étendant sur une première hauteur (11) qui représente au moins 10 % de la hauteur totale (10).

4. Rotor (1) selon la revendication 3, pour le moteur à flux axial (2), les aimants permanents (6, 7) présentant le long de la direction axiale (3) une extension (12) qui correspond à la hauteur totale (10) ; pour le moteur à flux radial (23) et le moteur à flux transversal (24), les aimants permanents (6, 7) présentant le long de la direction radiale (13) une extension (12) qui correspond à la hauteur totale (10).

5. Rotor (1) selon l'une des revendications précédentes, les aimants permanents (6, 7) s'étendant vers l'extérieur dans une direction radiale (13) au moins partiellement plus loin que le premier matériau (8).

6. Rotor (1) selon l'une des revendications précédentes, les aimants permanents (6, 7) s'étendant vers l'intérieur dans une direction radiale (13) au moins partiellement plus loin que le premier matériau (8).

7. Rotor (1) selon l'une des revendications précédentes, pour le moteur à flux radial (23) et le moteur à flux transversal (24), le premier matériau (8) étant disposé dans la direction radiale (13) adjacent à un stator (14) du moteur à flux radial (23) et du moteur à flux transversal (24).

8. Entraînement électrique sous la forme d'un moteur à flux axial (2), d'un moteur à flux radial (23) ou d'un moteur à flux transversal (24), comprenant au moins un stator (14) et un rotor (1) selon l'une des revendications précédentes, le stator (14) possédant une pluralité de noyaux (15) qui sont entourés par des bobines (16).

9. Entraînement électrique selon la revendication 8, le stator (14) possédant un composite magnétique tendre.
